# EUROPÄISCHE PATENTSCHRIFT

(11) **EP 1 446 998 B1**
(45) Veröffentlichungstag und Bekanntmachung des Hinweises auf die Patenterteilung: **19.08.2009**
(21) Anmeldenummer: 04100429.2
(22) Anmeldetag: 05.02.2004
(51) Int. Cl.: A01F 15/08

(54) **Vorrichtung zum Unterstützen des Austritts eines Rundballens**
Device to assist the exit of a round ball
Dispositif pour assister la sortie d'une balle ronde

(30) Priorität: 15.02.2003 DE 10306419
(43) Veröffentlichungstag der Anmeldung: 18.08.2004
(73) Patentinhaber: DEERE & COMPANY, Moline, Illinois 61265-8098 (US)
(72) Erfinder: Preece, David C., NG 13 9QA, Nottingham (GB)
(74) Vertreter: Magin, Ludwig Bernhard

(56) Entgegenhaltungen:
- US-A- 4 889 047
- US-B1- 6 240 712

## Beschreibung

Die Erfindung betrifft eine Vorrichtung zum Unterstützen des Austritts eines Rundballens aus einer Ballenpresskammer und eine damit versehene Rundballenpresse.

Die DE-A1-32 47 661 offenbart eine Rundballenpresse mit einem Stößel, der beim Öffnen der Heckklappe in den vorderen Gehäuseteil eingeschoben wird, um einen in dem Pressraum befindlichen Rundballen herauszudrücken.

Aus der DE-A1-32 34 748 geht eine Rundballenpresse mit Gleitplatten im vorderen unteren Bereich der Innenwände einer Heckklappe hervor, die sowohl die Reibung zwischen dem Rundballen und den vorderen Seitenwänden reduzieren, als auch die zwischen dem Rundballen und den rückwärtigen Seitenwänden erhöhen sollen, wodurch der Auswurf des Rundballens erleichtert werden soll.

Das der Erfindung zugrunde liegende Problem wird darin gesehen, dass die zuerst genannte Vorrichtung zu aufwendig und die zweite zu ineffektiv ist.

Dieses Problem wird erfindungsgemäß durch die Lehre des Patentanspruchs 1 bzw. 6 gelöst, wobei in den weiteren Patentansprüchen Merkmale aufgeführt sind, die die Lösung in vorteilhafter Weise weiterentwickeln.

Auf diese Weise wird der zum Auswerfen des Rundballens bewegte Gehäuseteil genutzt, den Rundballen aktiv zu erfassen, und zwar über die ohnehin vorhandene Reibung hinaus, und aus dem vorderen Gehäuseteil herauszuziehen. Das Kontaktelement kann in seiner Form, seinem Schwenkvermögen und in seiner Anlagekraft bzw. seiner Eindringtiefe wahlweise und eventuell gar verstellbar ausgebildet werden und sich somit an das Gewicht des Rundballens bzw. seinen Bewegungswiderstand anpassen; es ist dabei zu bedenken, dass ein Strohballen wesentlich weniger wiegt als ein Silageballen. Das sichere Erfassen des Rundballens vermeidet auch, dass er während des Auswurfs auf sich drehenden Presselementen, z. B. Rollen, sitzen bleibt und dabei ein auf ihm aufliegendes Netz oder dergleichen beschädigt wird. Das Kontaktelement kann so ausgebildet sein, dass es auf die Stirnoder Umfangsfläche drückt, oder so, dass es in diese in der Art eines Zahns, Zinkens, Dorns etc. eindringt; sein Verstellweg kann je nach Gewicht bzw. Bewegungswiderstand des Rundballens circa fünf bis 15 cm betragen. Die Bemessung ist so gewählt, dass nach einem bestimmten Weg des Gehäuseteils, der einer sicheren Bewegung des Rundballens aus der Ballenpresskammer heraus entspricht, der Rundballen aufgrund seines Gewichts oder in gesteuerter Weise von dem Gehäuseteil nicht mehr gehalten wird und auf den Boden fällt. Eine solche Vorrichtung kann nachträglich an bereits hergestellte Rundballenpressen angebracht oder bereits in neue Rundballenpressen serienmäßig integriert werden.

Das Kontaktelement kann in der einfachsten Art in der Art eines Widerhakens ausgebildet sein, der sich beim Anheben des Gehäuseteils in den Rundballen, insbesondere in dessen Stirnseite(n) krallt bzw. klemmt und diesen sodann mitnimmt. Erfolgt die Bewegung jedoch unter Fremdkraft, z. B. einer Feder, eines Motors, eines von einer Bedienungsperson oder infolge der Bewegung betätigten Gestänges, kann sowohl die Kraft als auch der Zeitpunkt des Kontakts beeinflusst bzw. gesteuert werden. Die Oberfläche des Kontaktelements, soweit es den Rundballen berührt, kann sowohl glatt, beschichtet oder auch profiliert sein, um einen optimalen Kontakt mit dem Rundballen herzustellen.

Wenn das Kontaktelement mittels eines Stellmotors an den Rundballen anlegbar oder in diesen einbringbar ist, kann der Weg, über den der Rundballen mitgenommen wird, hervorragend gesteuert werden. Gegebenenfalls kann der Stellmotor auch in beiden Richtungen bewegt werden, so dass ein teilweise über die Stirnseiten des Rundballens ragendes Netz beim Herausrutschen aus dem Gehäuseteil nicht beschädigt wird.

Der Stellmotor kann als ein Hydraulik-, Pneumatik- oder Elektromotor ausgebildet sein, was sich danach richtet, welche Kräfte übertragen werden müssen und welche Kraftquellen zur Verfügung stehen.

Die Klemm- bzw. Haltewirkung kann dadurch erhöht werden, dass mehrere Kontaktelemente vorgesehen werden, z. B. auf jeder Seite eines und/oder auch pro Seite mehrere.

Wenn eine Rundballenpresse mit wenigstens einem Kontaktelement in wenigstens einer seitlichen Wandung eines rückwärtigen schwenkbaren Gehäuseteils versehen ist, wird eine zuverlässige Entleerung des Ballenpressraums am Pressende sichergestellt werden.

Die Verwendung einer gemeinsamen Kraftquelle und insbesondere einer gemeinsamen Steuerung des Stellmotors für das oder die Kontaktelemente und für den Gehäuseteil hat mehrere Vorteile. Zum einen wird eine eigene, d.h. zusätzliche Kraftquelle und/oder Steuerung vermieden, was Kosten vermeidet. Zum anderen kann an dem Stellmotor für das Kontaktelement dann eine erhöhte Stellkraft anliegen, wenn beide Stellmotoren in Reihe oder parallel geschaltet sind und der Bewegungswiderstand des Gehäuseteils in direktem Verhältnis zu dem Gewicht des Rundballens und dessen Klemmkraft an den Seitenwänden des oder der Gehäuseteile steht. Wenn also der Rundballen stark in dem vorderen Gehäuseteil klemmt und/oder schwer ist, wird auch das Kontaktelement verstärkt auf den Rundballen drücken bzw. in diesen eindringen und dessen Mitnahme durch den beweglichen Gehäuseteil sicherstellen.

Andererseits kann der Stellmotor bzw. die Stellmotoren für die Kontaktelemente zwar gemeinsam mit den Stellmotoren für den beweglichen Gehäuseteil gespeist, aber bereits zu einem Zeitpunkt deaktiviert werden, zu dem die ersten noch betätigt werden. Dies ist möglich, weil der Rundballen nur soweit bewegt werden muß, bis er aus dem vorderen festen Gehäuseteil herausgezogen ist. Die Steuerung kann mittels eines Ventils, mittels einer mechanischen Überlastsicherung oder dergleichen erfolgen.

Wenn eine das Kontaktelement aufnehmende Wandung der Rundballenpresse derart ausgebildet ist, dass das Kontaktelement in seiner Außerbetriebsstellung nicht über die Oberfläche des Wandung übersteht, wird während des Press-, Binde- oder Wickelvorgangs vermieden, dass die Oberfläche des Rundballens, Netzes, der Folie oder des Garns beschädigt wird.

In der Zeichnung ist ein nachfolgend näher beschriebenes Ausführungsbeispiel der Erfindung dargestellt. Es zeigt:
- Fig. 1: eine Rundballenpresse mit einer Vorrichtung zum Unterstützen des Austritts eines Rundballens aus einer Ballenpreßkammer in schematischer Darstellung und in Seitenansicht,
- Fig. 2: die Vorrichtung in vergrößerter Darstellung in einer Außerbetriebsstellung in Seitenansicht und Draufsicht und in einer Betriebsstellung in Draufsicht, und
- Fig. 3: die Vorrichtung in weiter vergrößerter Darstellung in einer Betriebsstellung und in perspektivischer Darstellung.

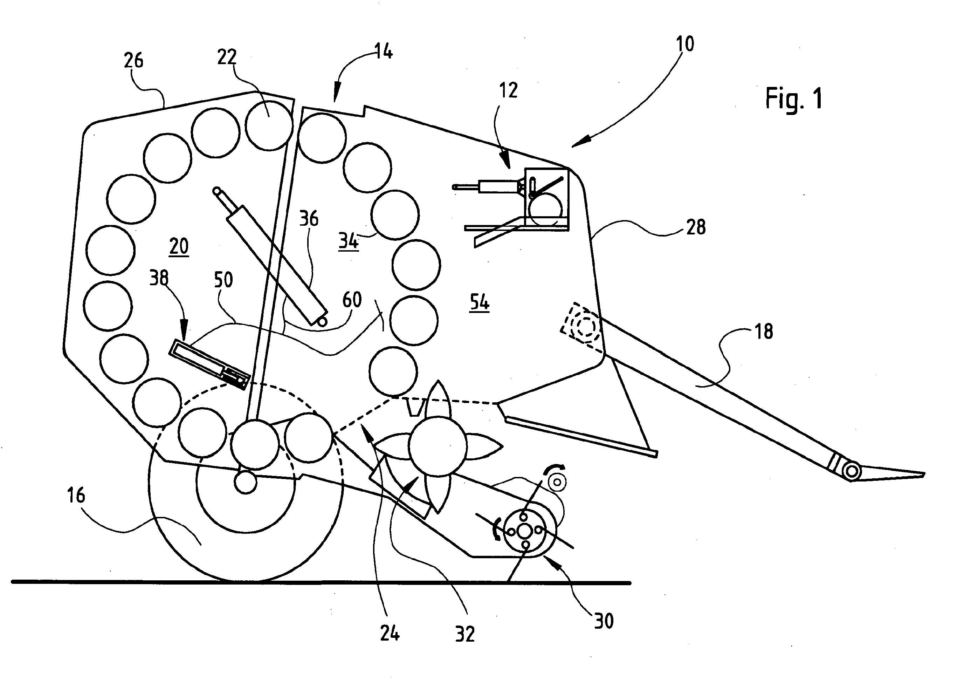

Figur 1 zeigt eine Rundballenpresse 10 mit einer Vorrichtung 12 zum Umhüllen eines Rundballens in der Rundballenpresse 10.

Die Rundballenpresse 10 enthält einen Rahmen 14, der sich auf Rädern 16 auf dem Boden abstützt und mittels einer Deichsel 18 an ein Zugfahrzeug angehängt werden kann. In der Rundballenpresse 10 ist eine Ballenpresskammer 20 gebildet, die im Wesentlichen von Rollen 22 umschlossen wird. Mit Blick auf Figur 1 befindet sich in einer nahezu 5-Uhr-Stellung ein Ernteguteinlaß 24, durch den Erntegut zugeführt wird. Der Rahmen 14 unterteilt sich in einen rückwärtigen vertikal schwenkbaren Gehäuseteil 26 und einen vorderen festen Gehäuseteil 28, in denen jeweils ungefähr die Hälfte der Rollen 22 auf einem Teil eines Kreisbogens angeordnet ist. Das Erntegut wird von dem Boden mittels eines Aufnehmers 30 angehoben und nach hinten zu dem Ernteguteinlaß 24 gefördert. Zwischen dem Aufnehmer 30 und dem Ernteguteinlaß 24 ist in diesem Ausführungsbeispiel ein Schneidwerk 32 vorgesehen, was jedoch keineswegs zwingend ist. Statt der dargestellten Bauweise könnte auch eine gewählt werden, bei der die Ballenpresskammer 20 nicht von Rollen 22, sondern von Riemen, Stabketten oder einer Mischung beider umgeben ist. Folglich kann die Ballenpresskammer 20 in ihrer Größe variabel oder fest ausgebildet sein.

Die Vorrichtung 12 steht stellvertretend für jede mögliche Vorrichtung zum Umhüllen des Rundballens mit Garn, Netz, Folie oder dergleichen.

In der Ballenpresskammer 20 ist ein in unterbrochenen Linien angedeuteter fertiger Rundballen 34 enthalten.

Zwischen dem vorderen festen und dem rückwärtigen vertikal schwenkbaren Gehäuseteil 28 und 26 erstreckt sich vorzugsweise auf jeder Seite der Rundballenpresse 10 ein Stellmotor 36 zum Anheben des rückwärtigen Gehäuseteils 26, wenn der Rundballen 34 aus der Ballenpreßkammer 20 ausgeworfen werden soll.

Insoweit entspricht die dargestellte Rundballenpresse 10 einer herkömmlicher Bauart.

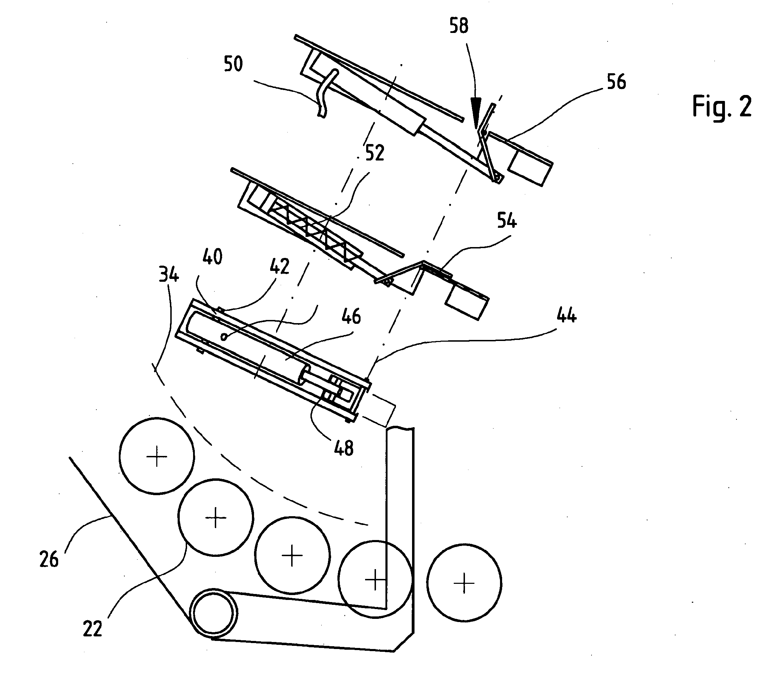

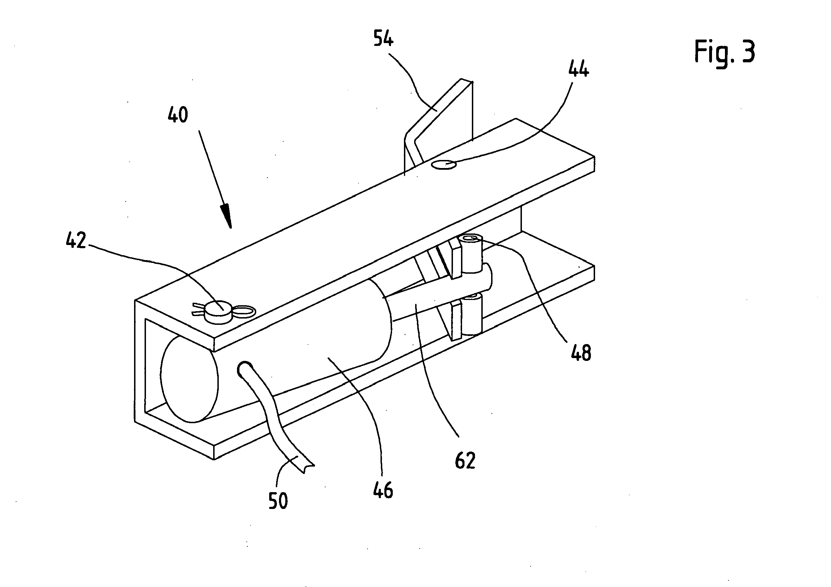

Schließlich und gemäß der Erfindung befindet sich in dem rückwärtigen Gehäuseteil 26 im Bereich der Ballenpresskammer 20 und in deren unteren Bereich eine Vorrichtung 38 zum Unterstützen des Austritts des Rundballens 34 aus der Ballenpresskammer 20; diese Vorrichtung 38 wird im folgenden anhand der Figuren 2 und 3 näher beschrieben.

Die Vorrichtung 38 enthält einen Halter 40, einen ersten Bolzen 42, einen zweiten Bolzen 44, einen Stellmotor 46, einen dritten Bolzen 48, eine Leitung 50, einen Kraftspeicher 52 und ein Kontaktelement 54.

Eine solche Vorrichtung 38 kann mehrfach pro Seite oder insgesamt auch nur einmal auf einer einzigen Seite vorgesehen werden.

Die Vorrichtung 38 ist an der Außenseite einer Seitenwand 56 des rückwärtigen Gehäuseteils 26 angebracht, die hierzu auch mit einer Öffnung 58 versehen ist.

Der Halter 40 enthält parallel und zueinander beabstandet verlaufende Stege, die an der Außenseite der Seitenwand 56 befestigt, z. B. angeschweißt sind. Der Halter 40 bzw. die Stege, sind von nicht näher bezeichneten zwei Sätzen von Bohrungen durchdrungen, die der Aufnahme des ersten und des zweiten Bolzens 42 und 44 dienen. Die Bohrungen oder Öffnungen für den ersten Bolzen 42 befinden sich an dem der Öffnung 58 abgelegenen Endbereich des Halters 40 und die Öffnungen für den zweiten Bolzen 44 befinden sich im Bereich der Öffnung 58. Die Bohrungen liegt um Achsen, die im Wesentlichen vertikal and parallel zu der Außenseite der Seitenwand 56 und zueinander parallel verlaufen. Der Halter 40 ist so geformt, dass zwischen seinen Stegen der Stellmotor 46 beweglich aufgenommen werden kann.

Der erste Bolzen 42 dient als Achse oder Welle und hat die Aufgabe, den Stellmotor 46 an dem Halter 40 schwenkbar aufzunehmen. Der Bolzen 42 wird in üblicher Weise an dem Halter 40 gesichert, z. B. mit Splinten, Gewinde, oder dergleichen.

Der zweite Bolzen 44 ist wie der erste ausgebildet und gesichert, dient aber der beweglichen Halterung des Kontaktelements 54. Demnach ist der zweite Bolzen 44 in den der Öffnung 58 zugelegenen Bohrungen aufgenommen.

Der Stellmotor 46 ist in diesem Ausführungsbeispiel als ein einfachwirkender Hydraulikmotor ausgebildet, der an das Hydrauliksystem für den Stellmotor 36 des rückwärtigen Gehäuseteils 26 angeschlossen ist. In dem Stellmotor 46 wirkt ein Kraftspeicher 52, der hier als eine interne Schraubendruckfeder dargestellt ist. Da je nach der Ausrichtung des Kontaktelements 54 und der Drehrichtung des Rundballens 34 das Kontaktelement 54 alleine von letzteren in seine Außerbetriebsstellung gebracht werden kann, bedarf es nicht immer eines solchen Kraftspeichers 52. Andererseits kann ein solcher Kraftspeicher 52 auch pneumatisch oder als Zugfeder ausgebildet sein und/oder auf der Außenseite des Stellmotors 46 vorhanden sein oder auf das Kontaktelement 54 oder dergleichen wirken. Schließlich kann der Stellmotor 46 auch als doppelt wirkender Stellmotor 46 ausgebildet sein, falls dies erforderlich sein sollte. Die einzige Aufgabe besteht darin, das Kontaktelement 54 aus der Ballenpresskammer 20 zu ziehen, falls dies erforderlich sein sollte. Dieser Stellmotor 46 ist über die Leitung 50 an eine Leitung 60 an den Stellmotor 36 angeschlossen, und zwar parallel; eine Schaltung in Reihe wäre unter Umständen jedoch ebenfalls möglich. Die Leitung 50 lässt ventilgesteuert unter Druck stehende Flüssigkeit in den Stellmotor 46 einströmen, die dem Kraftspeicher 52 entgegen wirkt. Der Stellmotor 46 hat die Aufgabe, das Kontaktelement 54, d. h. dessen sich in der Ballenpresskammer 20 befindlichen Teil, in die Ballenpresskammer 20 bzw. die Stirnfläche des Rundballens 34 hinein zu drücken.

Der dritte Bolzen 48 durchdringt eine Kolbenstange 62 des Stellmotors 46 parallel zu den Bolzen 42 und 44 und verbindet diese schwenkbar mit dem außerhalb der Ballenpresskammer 20 befindlichen Abschnitt des Kontaktelements 54. Auch dieser Bolzen 48 ist auf herkömmliche Weise gesichert und kann als Welle oder Achse dienen.

Das Kontaktelement 54 ist als eine biegesteife Platte ausgebildet, die ungefähr in der Mitte um circa achtzig Grad geknickt ist; sie ist in dem Knickbereich mittels des zweiten Bolzens 44 schwenkbar in dem Halter 40 gelagert. Das Kontaktelement 54 enthält eine sich in der Ballenpresskammer 20 befindlichen flachen und an der Innenseite der Seitenwand 56 oder in einer darin eingearbeiteten Tasche aufgenommenen Abschnitt und einen auf der Kolbenstange 62 schwenkbar gesicherten Abschnitt. Der in der Ballenpresskammer 20 befindliche Abschnitt ist groß genug, um in die Stirnseite des Rundballens 34 z. B. circa 70 mm eingedrückt zu werden. Das Kontaktelement 54 durchdringt in seinem Knickbereich die Öffnung 58.

Nach alledem ergibt sich folgende Funktion.

Es wird ausgegangen von einem Zustand, wie er in den Figuren 1 und 2 (untere und mittlere Darstellung der Vorrichtung 38) gezeigt ist, und in dem ein Rundballen 34 fertig ausgebildet in der Ballenpresskammer 20 auf seinen Auswurf wartet.

Ausgehend von diesem Zustand wird die Leitung 60 unter Druck gesetzt, so dass der zugehörige Stellmotor 36 ausfährt und den rückwärtigen Gehäuseteil 26 nach oben schwenkt. Aufgrund der Verbindung der Leitungen 50 und 60 wird auch an dem Stellmotor 46 Druck angelegt, der damit das Kontaktelement um den zweiten Bolzen 44 schwenkt, so dass sich der in der Ballenpresskammer 20 befindliche Abschnitt von der Innenseite der Seitenwand 56 weg bewegt und sich in die Seitenfläche(n) des Rundballens 34 drückt. Während also der Gehäuseteil 26 angehoben wird, packt er mittels des oder der Kontaktelemente 54 den Rundballen 34 und zieht ihn aus dem vorderen Gehäuseteil 28 heraus. Dabei wird zugleich die Auflagekraft des Rundballens 34 auf der rückwärtigsten untersten Rolle 22 des vorderen Gehäuseteils 28 verringert. Währenddessen steht an beiden Stellmotoren 36 and 46 der gleiche Druck an. Sobald der Rundballen 34 aus dem vorderen Gehäuseteil 28 herausgezogen ist, kann er von den Kontaktelementen 54 nicht mehr gehalten werden und fällt aus dem hochgeschwenkten rückwärtigen Gehäuseteil 26 auf den Boden. In einem Fall, in dem die Rundballenpresse 10 mit einer nicht dargestellten Vorrichtung versehen ist, die es ermöglicht, Netz oder Folie nicht nur auf die Umfangsfläche, sondern wenigstens auch teilweise auf die Stirnfläche aufzulegen, ist der Stellmotor 46 vorzugsweise so ausgebildet bzw. gesteuert, dass er das Kontaktelement 54 schnell zurückziehen kann, wenn der Rundballen 34 zu rutschen beginnt. Auf diese Weise wird verhindert, dass der auf der Stirnfläche gelegene Teil des Netzes bzw. der Folie beschädigt wird.

## Patentansprüche

1. Vorrichtung (38) zum Unterstützen des Austritts eines Rundballens (34) aus einer Ballenpreßkammer (20) mit einem beweglichen Kontaktelement (54) zum kraft- oder formschlüssigen Beaufschlagen der Oberfläche des Rundballens (34), das an einem zum Auswerfen des Rundballens beweglichen Gehäuseteil (26) angebracht ist.

2. Vorrichtung nach Anspruch 1, **dadurch gekennzeichnet, dass** das Kontaktelement (54) kraftbetätigbar ist.

3. Vorrichtung nach Anspruch 1 oder 2, **dadurch gekennzeichnet, dass** das Kontaktelement (54) mittels eines Stellmotors (46) an den Rundballen (34) anlegbar oder in diesen einbringbar ist.

4. Vorrichtung nach Anspruch 3, **dadurch gekennzeichnet, dass** der Stellmotor (46) als ein Hydraulik-, Pneumatik- oder Elektromotor ausgebildet ist.

5. Vorrichtung nach einem oder mehreren der vorherigen Ansprüche, **dadurch gekennzeichnet, dass** mehrere Kontaktelemente (54) vorgesehen sind.

6. Rundballenpresse (10) mit einer Vorrichtung nach einem oder mehreren der vorherigen Ansprüche, **dadurch gekennzeichnet, dass** wenigstens ein Kontaktelement (54) in wenigstens einer Seitenwand (36) eines rückwärtigen schwenkbaren Gehäuseteils (26) vorgesehen ist.

7. Rundballenpresse nach Anspruch 6, **dadurch gekennzeichnet, dass** der Stellmotor (46) der Vorrichtung (38) und ein Stellmotor (36) zum Verstellen des Gehäuseteils (26) aus einer Kraftquelle gespeist werden.

8. Rundballenpresse nach Anspruch 6 oder 7, **dadurch gekennzeichnet, dass** der wenigstens eine Stellmotor (46) der Vorrichtung (38) von dem Stellmotor (36) zum Verstellen des Gehäuseteils (26) unabhängig steuerbar ist.

9. Rundballenpresse nach einem oder mehreren der vorherigen Ansprüche 6 bis 8, **dadurch gekennzeichnet, dass** eine das Kontaktelement (54) aufnehmende Seitenwand (56) derart ausgebildet ist, dass das Kontaktelement (54) in seiner Außerbetriebsstellung nicht über die Oberfläche des Seitenwand (56) übersteht.

## Claims

1. Device (38) to assist the exit of a round bale (34) from a baling chamber (20) with a movable contact element (54) for acting frictionally or in interlocking manner on the surface of the round bale (34), said contact element being attached to a housing part (26) which is movable for the ejection of the round bale.

2. Device according to Claim 1, **characterized in that** the contact element (54) can be actuated by force.

3. Device according to Claim 1 or 2, **characterized in that** the contact element (54) can be placed onto the round bale (34) or can be placed in the same by means of a servomotor (46).

4. Device according to Claim 3, **characterized in that** the servomotor (46) is designed as a hydraulic, pneumatic or electric motor.

5. Device according to one or more of the preceding claims, **characterized in that** a plurality of contact elements (54) is provided.

6. Round baler (10) with a device according to one or more of the preceding claims, **characterized in that** at least one contact element (54) is provided in at least one side wall (36) of a rear pivotable housing part (26).

7. Round baler according to Claim 6, **characterized in that** the servomotor (46) of the device (38) and a servomotor (36) for adjusting the housing part (26) are fed from a source of power.

8. Round baler according to Claim 6 or 7, **characterized in that** the at least one servomotor (46) of the device (38) can be controlled independently of the servomotor (36) for adjusting the housing part (26).

9. Round baler according to one or more of the preceding claims 6 to 8, **characterized in that** a side wall (56) accommodating the contact element (54) is designed in such a manner that, in its rest position, the contact element (54) does not protrude over the surface of the side wall (56).

## Revendications

1. Dispositif (38) permettant de favoriser la sortie d'une balle ronde (34) d'une chambre de pressage de balle (20) comprenant un élément de contact mobile (54) pour solliciter par engagement par force ou par coopération de forme la surface de la balle ronde (34), qui est montée sur une partie de boîtier (26) déplaçable pour éjecter la balle ronde.

2. Dispositif selon la revendication 1, **caractérisé en ce que** l'élément de contact (54) peut être actionné par une force.

3. Dispositif selon la revendication 1 ou 2, **caractérisé en ce que** l'élément de contact (54) peut être appliqué au moyen d'un moteur de commande (46) contre la balle ronde (34) ou être introduit dans celle-ci.

4. Dispositif selon la revendication 3, **caractérisé en ce que** le moteur de commande (46) est réalisé sous forme de moteur hydraulique, pneumatique ou électrique.

5. Dispositif selon l'une quelconque ou plusieurs des revendications précédentes, **caractérisé en ce que** plusieurs éléments de contact (54) sont prévus.

6. Presse à balles rondes (10) comprenant un dispositif selon l'une quelconque ou plusieurs des revendications précédentes **caractérisé en ce qu'**au moins un élément de contact (54) est prévu dans au moins une paroi latérale (36) d'une partie de boîtier (26) pouvant pivoter vers l'arrière.

7. Presse à balles rondes selon la revendication 6, **caractérisée en ce que** le moteur de commande (46) du dispositif (38) et un moteur de commande (36) pour déplacer la partie de boîtier (26) sont alimentés par une source de puissance.

8. Presse à balles rondes selon la revendication 6 ou 7, **caractérisée en ce qu'**au moins un moteur de commande (46) du dispositif (38) peut être commandé de manière indépendante par le moteur de commande (36) pour déplacer la partie de boîtier (26).

9. Presse à balles rondes selon l'une quelconque ou plusieurs des revendications précédentes 6 à 8, **caractérisée en ce qu'**une paroi latérale (56) recevant l'élément de contact (54) est réalisée de telle sorte que l'élément de contact (54), dans sa position non fonctionnelle, ne dépasse pas au-delà de la surface de la paroi latérale (56).
